# EUROPEAN PATENT APPLICATION

(11) **EP 1 383 326 A2**
(43) Date of publication of application: **21.01.2004**
(21) Application number: 03010922.7
(22) Date of filing: 15.05.2003
(51) Int. Cl.: H04N 7/16

(54) **Parsed program guide data**

(30) Priority: 27.06.2002 US 185944
(71) Applicant: MICROSOFT CORPORATION, Redmond, Washington 98052-6399 (US)
(72) Inventor: Deshpande, Amod Dattatray, Mountain View, California 94043 (US); Wingerden, Paul Van, Schiphol-Rjik, 1119 PE (NL); Shield, Alan Edward, Issaquah, Washington 98029 (US)
(74) Representative: Grünecker, Kinkeldey, Stockmair & Schwanhäusser Anwaltssozietät

(57) **Abstract**

A program guide data system is described that parses program guide data into data sections such that program guide data corresponding to a program is distributed into one or more of the data sections. A program guide data file is generated that includes the data sections and the program guide data file is communicated to client devices. In an implementation, the data sections are similarly formatted to include various element data types that contain the program guide data and/or are indexes to additional data sections that contain the program guide data.

## Description

### TECHNICAL FIELD

This invention relates to television-based entertainment and information architectures and, in particular, to parsed program guide data.

### BACKGROUND

Television-based entertainment and information systems include client devices that receive program guide data which is information that describes programs such as television shows and movies. Program guide data can include such information as program titles, descriptions of the programs, station and channel identifiers, and other schedule information. Additionally, program guide data may include video on-demand content information, such as movie schedules, as well as application information, such as for interactive games, and other programming information that may be of interest to a viewer.

When a headend service, such as a network operator, receives the program guide data from a program guide data provider, the program guide data is not organized or formatted when it is passed along to the client devices. When a client device receives the program guide data, a program guide application in a client device organizes and processes the program guide data to generate an electronic or interactive program guide which enables a television viewer to navigate through a display of the programming information and locate programs such as television shows and video on-demand movies.

Accordingly, for television-based entertainment and information systems, there is a need for a technique to parse and organize program guide data before providing the program guide data to client devices to minimize the program guide data processing and formatting performed at a client device.

### SUMMARY

A program guide data system parses program guide data into data sections such that program guide data corresponding to a program is distributed into one or more of the data sections. A program guide data file is generated that includes the data sections and the program guide data file is communicated to client devices. In an implementation, the data sections are similarly formatted to include various element data types that contain the program guide data and/or are indexes to additional data sections that contain the program guide data. The data sections having program guide data corresponding to a program are cross-referenced and/or indexed to minimize program guide data processing at a client device.

### BRIEF DESCRIPTION OF THE DRAWINGS

The same numbers are used throughout the drawings to reference like features and components.

Fig. 1 illustrates an exemplary system architecture in which the systems and methods for parsed program guide data can be implemented.

Fig. 2 illustrates various components of an exemplary parsed program guide data system.

Fig. 3 illustrates an exemplary program guide data file that includes parsed program guide data.

Fig. 4 is a flow diagram that illustrates a method for parsed program guide data.

Fig. 5 is a flow diagram that illustrates a method for parsed program guide data.

### DETAILED DESCRIPTION

A program guide data system is described that parses program guide data into data sections such that program guide data corresponding to a program is distributed into one or more of the data sections. A program guide data file is generated that includes the data sections and the program guide data file is communicated to client devices. In an implementation, the data sections are similarly formatted to include various element data types that contain the program guide data and/or are indexes to additional data sections that contain the program guide data.

The data sections having program guide data corresponding to a program are cross-referenced and/or indexed to minimize program guide data processing at a client device. Additionally, the program guide data file format compresses the program guide data which saves system resources to maintain or store the program guide data, and reduces the bandwidth required to transmit, or otherwise communicate, the program guide data from a headend service to a client device.

The following discussion is directed to television-based entertainment and information systems, such as interactive TV networks, cable networks, and Web-enabled TV networks that utilize electronic and interactive program guides. Client devices in such systems range from full-resource clients with substantial memory and processing resources, such as TV-enabled personal computers and TV recorders equipped with hard-disks, to low-resource clients with limited memory and/or processing resources, such as traditional set-top boxes. While aspects of the described systems and methods can be used in any of these systems and for any types of client devices, they are described in the context of the following exemplary environment.

### Exemplary System Architecture

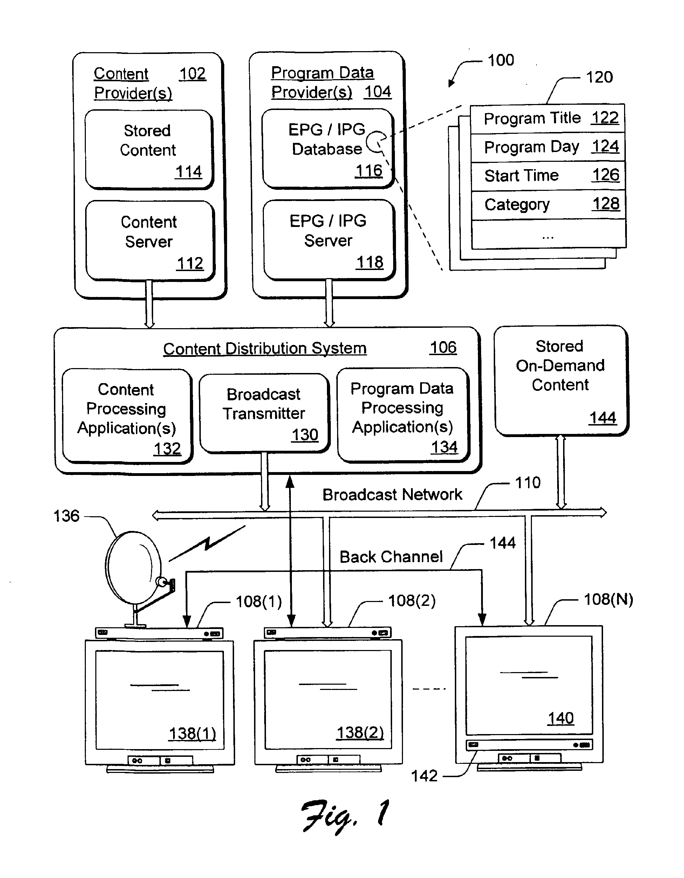

Fig. 1 illustrates an exemplary television entertainment system 100 that is an architecture in which parsed program guide data can be implemented. System 100 facilitates distribution of content and program guide data to multiple viewers, and includes components to further facilitate parsed program guide data. The system 100 includes one or more content providers 102, one or more program data providers 104, a content distribution system 106, and multiple client devices 108(1), 108(2), ..., 108(N) coupled to the content distribution system 106 via a broadcast network 110.

Content provider 102 includes a content server 112 and stored content 114, such as movies, television programs, commercials, music, and similar audio and/or video content. Content server 112 controls distribution of the stored content 114 from content provider 102 to the content distribution system 106. Additionally, content server 112 controls distribution of live content (e.g., content that was not previously stored, such as live feeds) and/or content stored at other locations to the content distribution system 106. Program data provider 104 includes an electronic program guide (EPG) and/or Interactive Program Guide (IPG) database 116 and an EPG and/or IPG server 118. The program guide database 116 stores electronic files of program data which is used to generate an electronic or interactive program guide (or, "program guide").

An electronic file maintains program guide data 120 (or, "EPG data", or "IPG data") that may include a program title 122, program broadcast day(s) 124 to identify which days of the week the program will be shown, program start times(s) 126 to identify a time that the program will be shown on the particular day or days of the week, and a program category 128. A program category describes the genre of a program and categorizes it as a particular program type. For example, a program can be categorized as a movie, a comedy, a sporting event, a news program, a sitcom, a talk show, or as any number of other category descriptions. Program guide data can also include program ratings, characters, descriptions, actor names, station identifiers, channel identifiers, other schedule information, and so on. Additionally, program guide data may include video on-demand content information, such as movie schedules, as well as application information, such as for interactive games, and other programming information that may be of interest to a viewer.

The program guide server 118 processes the program data prior to distribution to generate a published version of the program guide data which can contain programming information for all broadcast channels and on-demand content listings for one or more days. The processing may involve any number of techniques to reduce, modify, or enhance the program guide data. Such processes might include selection of content, content compression, format modification, and the like. The program guide server 118 controls distribution of the published version of the program guide data from program data provider 104 to the content distribution system 106 using, for example, a file transfer protocol (FTP) over a TCP/IP network (e.g., Internet or Intranet). Further, the published version of the program guide data can be transmitted from program data provider 104 via a satellite and the content distribution system 106 directly to a client device 108.

Content distribution system 106 includes a broadcast transmitter 130, one or more content processing applications 132, and one or more program data processing applications 134. Broadcast transmitter 130 broadcasts signals, such as cable television signals, across broadcast network 110. Broadcast network 110 can include a cable television network, RF, microwave, satellite, and/or data network, such as the Internet, and may also include wired or wireless media using any broadcast format or broadcast protocol. Additionally, broadcast network 110 can be any type of network, using any type of network topology and any network communication protocol, and can be represented or otherwise implemented as a combination of two or more networks.

A content processing application 132 processes the content received from content provider 102 prior to transmitting the content across broadcast network 110. Similarly, a program data processing application 134 processes the program guide data received from program data provider 104 prior to transmitting the program guide data across broadcast network 110. A particular content processing application 132 may encode, or otherwise process, the received content into a format that is understood by the multiple client devices 108(1), 108(2), ..., 108(N) coupled to broadcast network 110. Although Fig. 1 shows a single content provider 102, a single program data provider 104, and a single content distribution system 106, exemplary system 100 can include any number of content providers and/or program data providers coupled to any number of content distribution systems.

Content distribution system 106 is representative of a headend service that provides EPG and/or IPG data, as well as content, to multiple subscribers. Each content distribution system 106 may receive a slightly different version of the program guide data that takes into account different programming preferences and lineups. The program guide server 118 can create different versions of an electronic or interactive program guide that includes those channels of relevance to respective headend services, and the content distribution system 106 transmits the electronic or interactive program guide data to the multiple client devices 108(1), 108(2), ..., 108(N). In one implementation, for example, content distribution system 106 utilizes a carousel file system to repeatedly broadcast the program data over an out-of-band (OOB) channel to the client devices 108. Alternatively, the multiple client devices 108(1), 108(2), ..., 108(N) can receive standard, or uniform, program guide data and individually determine the program guide data to display based on the associated headend service.

A client device 108 can be implemented as a set-top box, a satellite receiver, a TV recorder with a hard disk, a digital video recorder (DVR) and playback system, a personal video recorder (PVR) and playback system, a game console, an information appliance, and as any number of similar embodiments. For example, a client device 108(1) receives broadcast content from a satellite-based transmitter via a satellite dish 136. Client device 108(1) is coupled to a television 138(1) for presenting the content received by the client device (e.g., audio data and video data), as well as a graphical user interface. A particular client device 108 can be coupled to any number of televisions 138 and/or similar devices that can be implemented to display or otherwise render content. Similarly, any number of client devices 108 can be coupled to a single television 138.

Client device 108(2) is also coupled to receive broadcast content from broadcast network 110 and provide the received content to associated television 138(2). Client device 108(N) is an example of a combination television 140 and integrated set-top box 142. In this example, the various components and functionality of the set-top box are integrated into the television, rather than using two separate devices. The set-top box integrated into the television can receive broadcast signals via a satellite dish (similar to satellite dish 136) and/or via broadcast network 110.

In alternate implementations, client devices 108 may receive broadcast signals via the Internet or any other broadcast medium, such as over back channel 144 which can be implemented as a Internet protocol (IP) connection or as other protocol connections using a modem connection and conventional telephone line, for example. Further, back channel 144 provides an alternate communication link between each of the client devices 108, and between the client devices 108 and the content distribution system 106.

The exemplary system 100 also includes stored on-demand content 144, such as Video On-Demand (VOD) movie content. The stored on-demand content can be viewed with a television 138 via a client device 108 through an onscreen movie guide, for example, and a viewer can enter instructions to stream a particular movie, or other stored content, to a corresponding client device 108.

### Exemplary Parsed Program Guide Data System

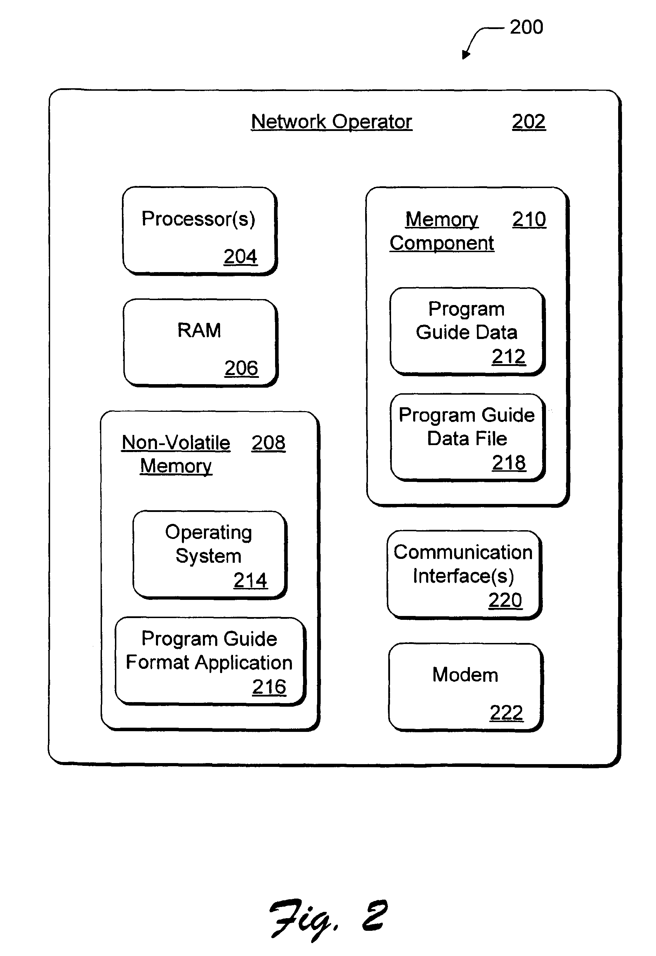

Fig. 2 illustrates an exemplary parsed program guide data system 200 that includes a network operator 202 as an implementation of the content distribution system 106 (Fig. 1) which provides program guide data, as well as content, to multiple client devices. Network operator 202 includes components to generate parsed program guide data in a television-based entertainment and information system.

Computing components of network operator 202 include one or more processors 204 (e.g., microprocessors) which process various instructions to control the operation of network operator 202 and to communicate with other electronic and computing devices, such as client devices 108. Network operator 202 can be implemented with one or more memory components, examples of which include a random access memory (RAM) 206, a non-volatile memory 208 (e.g., ROM, Flash, EPROM, EEPROM, etc.), and a memory component 210 implemented as a program guide database, for example. The memory components (e.g., RAM 206, non-volatile memory 208, and memory component 210) store various information and/or data such as received content, program guide data 212, and/or configuration information for network operator 202.

An operating system 214 and a program guide format application 216, as well as other application programs (not shown), can be stored in non-volatile memory 208 and executed on a processor 204 to provide a runtime environment. A runtime environment facilitates extensibility of network operator 202 by allowing various interfaces to be defined that, in turn, allow application programs to interact with network operator 202. The application programs that may be implemented in network operator 202 can include a browser to browse the Web (e.g., "World Wide Web"), an email program to facilitate electronic mail, and so on.

The program guide format application 216 generates a program guide data file 218 which includes program guide data sections of parsed program guide data. The program guide format application parses the program guide data 212 to generate the program guide data file 218 prior to communicating the program guide data file 218 to client devices 108. The program guide format application 216 can be implemented as a software component to generate the program guide data file 218, or can be implemented as several component applications distributed to each perform one or more functions to parse program guide data.

Network operator 202 further includes one or more communication interfaces 220 and a PSTN, DSL, or cable modem 222. A communication interface 220 can be implemented as a serial and/or parallel interface, as a wireless interface, and/or as any other type of network interface to establish a communication link with broadcast network 110 (Fig. 1). Modem 222 facilitates network operator 202 communication with other electronic and computing devices via a conventional telephone line, a DSL connection, or a cable modem to establish a communication link via back channel 144 (Fig. 1) .

A system bus (not shown) typically connects the various components within network operator 202. A system bus can be implemented as one or more of any of several types of bus structures, including a memory bus or memory controller, a peripheral bus, an accelerated graphics port, or a local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

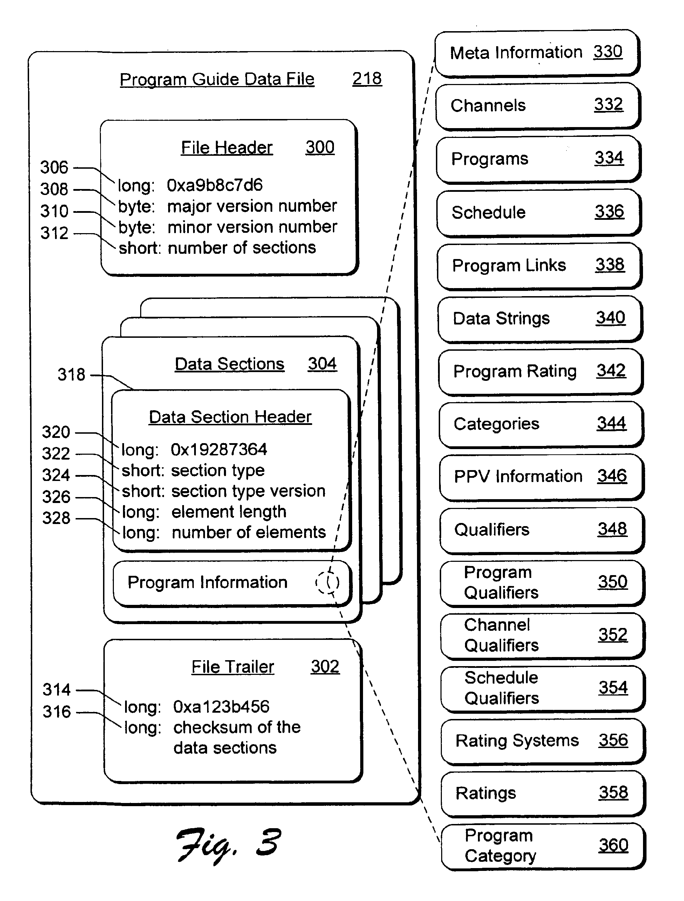

Fig. 3 illustrates an exemplary program guide data file 218 generated with the program guide format application 216 in network operator 202 (Fig. 2). The format of program guide data file 218 includes a file header 300, a file trailer 302, and multiple program guide data sections 304 which each include information from the program guide data 212 corresponding to the programs. The program guide data file 218 can be generated to include program guide data for one day, or can include program guide data for more than one day. In the particular implementation described herein, the program guide data file 218 is self sufficient in terms of the program guide data listings. Further, the data file 218 corresponds to a particular headend service, a locale, and a twenty-four hour time period which is based on an authoritative start time. At a client device, the single program guide data file 218 can be parsed independently, and listings from other program guide data files can be integrated seamlessly.

Data types for the program guide data file 218 are defined as a byte (eight bits), a short (sixteen bits), a tri (thirty-two bits), a string (thirty-two bits), and a long (thirty-two bits). All of the data types are represented in a big-endian format where the most significant value in a data sequence is stored first at the lowest storage address in memory. An entry of program information into a data section 304 of the program guide data file 218 of the form "datatype: (2: field1, 4: field2)" indicates that field1 is two bits and that field2 is four bits. When the total number of bits does not equal the size of the entry datatype, the bits are right justified. For example, the following entry "byte: (2: 0x3, 4: 0x8 (hex))" is represented as b00111000. Further, an entry of program information of the form "string: (field1, field2)" indicates a single twenty-four bit index into a section for strings of the program guide data file 218. The first variable fieldl is a null terminated string directly followed by field2 which is also a null terminated string.

The file header 300 is eight bytes of program guide data file 218 information that includes data type 306 which is a verification value that indicates the start of a file (rather than some corrupted data, for example), a major version number 308 which indicates a major revision of the program guide data file 218, a minor version number 310 which indicates a minor revision to the program guide data file 218, and a number of sections 312 to indicate how many program guide data sections 304 of program information are included in the program guide data file 218. The major version number 308 and the minor version number 310 enable making changes to the program guide data file 218 such that different versions of client devices 108 can receive and decode different versions of the program guide data file 218. The minor version number 310 is incremented to indicate a small change to the file format, such as adding one value for example. The major version number 308 is incremented to indicate a new release of a product, for example, having multiple data file 218 changes.

The file trailer 302 is eight bytes of program guide data file 218 information that includes data type 314 which is a verification value that indicates the end of a file (rather than some corrupted data, for example), and a checksum 316 of the program guide data sections 304, such as a CRC (cyclic redundancy checking) method of checking for errors in the program guide data file 218 when communicating the program guide data file from network operator 202 to a client device 108.

The program guide data sections 304 include a sixteen byte header 318 followed by program information specific to a particular section. The data section header 318 includes data type 320 which is a section verification marker, a section type 322 which identifies the program information included within a particular data section, a section type version 324 which indicates the particular data section version, and an element length 326 and a number of elements 328 are multiplied to indicate the total program information associated with a particular program guide data section 304.

Each of the program guide data sections 304 are defined to include program information from the program guide data 212 corresponding to the programs. In the exemplary implementation described herein, the program guide data 212 is parsed into defined program guide data sections 304 that include meta information 330, channels 332, programs 334, schedule 336, program links 338, data strings 340, program rating 342, categories 344, pay-per-view information 346, qualifiers 348, program qualifiers 350, channel qualifiers 352, schedule qualifiers 354, rating systems 356, a ratings section 358, and program category 360.

**Channels data section**: The channels data section 332 includes the following program guide data file 218 information:

| | |
|---|---|
| Section id | 1 |
| Section version | 1 |
| Element length | 15 |
| Number of elements | number of channels |

Each of the program guide data sections include a section identifier to identify a location of the data section in the program guide data file 218. In this example, the channels data section 332 is the first section of the program guide data file 218. When a client device receives the program guide data file 300 from network operator 202, the client device can utilize the program guide data sections that are recognized, and/or disregard the program guide data sections that are not recognized according to the section identifier. This allows for different client devices having different program guide formats to receive and process a common program guide data file 218. Each of the program guide data sections also include a section version number which can be incremented to indicate a modification or newer version of a data section.

The total length in bytes of elements in the channels data section 332 is fifteen and the number of elements is the total number of channels in program guide data 212. The element data types for the channels data section include the following:
- short:: tuner number
- byte:: (1: IsAlias, 2: ChannelMode, 1: SupressListings, 1: PreemptListings)
- string:: (station call letters, network call letters)
- long:: (1: are bounds known, 11: start time in minutes, 11: end time in minutes, 7: days broadcast (SMTWHFS))
- long:: channel service identifier

The tuner number indicates the channel number that a viewer tunes to at the client device to watch a program on a particular channel. The "IsAlias" parameter can represent one channel that will appear as multiple channels on a client device. For example, a pay-per-view logo that is displayed on several channels is included in the program guide data file 218 once, but will be displayed on the several channels at the client device. If "IsAlias" is set for a particular channel, the channel is an alias for the closest prior channel that does not have its "IsAlias" bit set.

The "ChannelMode" parameter identifies a service tier of the channel as Basic, Expanded Basic, Premium, PPV, Music, and the like. The "SupressListings" parameter identifies that the channel is not part of grid. The "PreemptListings" parameter identifies that in the case of split channels, the listings for a channel change are preempted. The elements include the station call letters and the network call letters associated with a particular channel, as well as a channel service identifier which is a DVB service identification number that identifies the particular channel. Other information corresponding to a particular channel includes an indication as to whether bounds are known which is used to indicate whether channel time bounds are known in case of split channels, and a start time, end time, and the days of the week that the particular channel is broadcast.

**Programs data section**: The programs data section 334 includes the following program guide data file 218 information:

| | |
|---|---|
| Section id | 2 |
| Section version | 1 |
| Element length | 12 |
| Number of elements | number of programs |

The programs data section 334 is identified as the second section of the program guide data file 218, has a total element length of twelve bytes, and includes the total number of programs in program guide data 212 as the number of elements. The element data types for the programs data section include the following:
- string: (title, description)
- byte:: (1: automatic movie link)
- short:: duration (in minutes)
- byte:: year of publication
- long:: program service identifier

The title and description parameters are an index to the data strings data section 340. As described above, an index into the data strings data section of the format "string: (field1, field2)" is a single index where the first variable field1 (e.g., "title") is a null terminated string directly followed by field2 (e.g., "description") which is also a null terminated string. The "automatic movie link" parameter indicates a URL (universal resource locator) where information associated with the program can be located. Other information corresponding to a particular program includes the duration of the program in minutes, the publication year of the program, and a program service identifier which is a DVB program identification number that identifies the particular program.

**Schedule data section**: The schedule data section 336 cross-references programs with respective broadcast channels and includes the following program guide data file 218 information:

| | |
|---|---|
| Section id | 3 |
| Section version | 1 |
| Element length | 10 |
| Number of elements | number of schedule entries |

The schedule data section 336 is identified as the third section of the program guide data file 218, has a total element length of ten bytes, and includes the total number of schedule entries in program guide data 212 as the number of elements. The element data types for the schedule data section include the following:
- short:: channel
- short:: program
- short:: start time (in minutes)
- short:: duration (in minutes)
- short:: (1: chat, 1: news, 1: weather, 1: movie, 1: newseries 1: lastinseries, 1: multichannelaudio, 1: signlanguage, 1: bilingual, 1: widescreen, 1: teletext, 1: subtitled, 1: has PPV info, 1: closed captioned, 1: repeat, 1: stereo)

The "channel" and "program" parameters are indexes into the channels data section 332 and into the programs data section 334, respectively. Because programs may often be repeated, cross-referencing the programs with the respective broadcast channels in this schedule data section 336 further minimizes the amount of program guide data 212 maintained with program guide data file 218. Other information corresponding to a particular schedule entry includes the start time of the program and the duration of the program both in minutes, as well as the category and rendering information included in the element data type list above.

**Program Links**: The program links data section 338 relates a program with additional associated information, such as with a Web site having information about a movie. The program links data section includes the following program guide data file 218 information:

| | |
|---|---|
| Section id | 4 |
| Section version | 1 |
| Element length | 17 |
| Number of elements | number of program links |

The programs data section 338 is identified as the fourth section of the program guide data file 218, has a total element length of seventeen bytes, and includes a total number of program links as the number of elements. The element data types for the program links data section include the following:
- byte:: (1: service handled, 2: program link type)
- short:: program identifier one of the following two (string or tri):
- string:: URL (service handled=false)
- tri:: unused (service handled=true) one of the following two (tri or string):
- tri:: offset from start (in seconds) (type=program, program static)
- string:: key phrase (type=key phrase)
- short:: duration (in seconds)
- string:: description

The "service handled" parameter identifies whether the program link is internal or external. An internal link signifies that a request be handled by a service, while an external link is a site URL. The "program link type" parameter identifies whether the link is specific to the program episode or is static for all the showings of the program. The element data type parameters include a program identifier, a duration of crossover link display in seconds, and a description index into the data strings data section 340 to a description of the program. Other information includes either a URL (universal resource locator) to a Web site for example, or indicates that the element data type is unused. Additionally, the information includes an "offset from the start" parameter which indicates a crossover link display start time, or a "key phrase" which identifies that a link is not program specific, but related to a key phrase that describes the program.

**Data Strings data section**: The data strings data section 340 includes the string programming information and is indexed from one or more of the other data sections. The data strings data section includes the following program guide data file 218 information:

| | |
|---|---|
| Section id | 5 |
| Section version | 1 |
| Element length | variable |
| Number of elements | 1 |

The data strings data section 340 is identified as the fifth section of the program guide data file 218, has a variable element length to accommodate any number of varying lengths of string data, and is formatted as one element. The element is an arbitrary number of null terminated strings. The data strings data section 340 is implemented to support UTF-8 formatted strings which can be used to encode most languages. The string data can be encoded with an encoding scheme, such as UTF-8, and can also be compressed with a data compression technique that utilizes encoding scheme values as compression indexing values where the encoding scheme values are part of the encoding scheme. This data compression technique is described in a copending US Patent Application entitled "Program Guide Data Compression" by inventors Shield et al. filed June , 2002, and having serial number , the disclosure of which is incorporated herein by reference.

**Program Rating data section**: The program rating data section 342 cross-references a program with a particular program rating and includes the following program guide data file 218 information:

| | |
|---|---|
| Section id | 6 |
| Section version | 1 |
| Element length | 4 |
| Number of elements | number of program ratings |

The program rating data section 342 is identified as the sixth section of the program guide data file 218, has a total element length of four bytes, and includes the total number of program ratings as the number of elements. The element data types for the program rating data section include the following:
- short:: program index
- short:: rating index

The "program index" and "rating index" parameters are indexes into the programs data section 334 and into a ratings data section 358, respectively, to cross-reference a particular program with a program rating.

**Meta Information data section**: The meta information data section 330 includes general information about the program guide data file 218 (for one day, for example) and includes the following program guide data file information:

| | |
|---|---|
| Section id | 7 |
| Section version | 5 |
| Element length | 38 |
| Number of elements | 1 |

The meta information data section 330 is identified as the seventh section of the program guide data file 218, has a total element length of thirty-eight bytes, and is formatted as one element. The element data types for the meta information data section include the following:
- long:: first schedule entry start time (in seconds)
- long:: last schedule entry end time (in seconds)
- long:: generation time (in seconds)
- byte:: (1: string section is compressed, 1: has A/B information)
- string:: headend identifier
- string:: target locale
- byte:: data source type
- long:: last schedule entry start time in seconds
- long:: authoritative start time
- long:: authoritative end time
- string:: unique dictionary id/name

The "first schedule entry start time" indicates the beginning start time for the first program in the program guide data 212, and the "last schedule entry end time" indicates the end of the program guide data. The "generation time" indicates the UTC time that the program guide data file 218 was created by a server (e.g., the network operator 202) for transmission to a client device. A one bit indicator identifies whether the data strings data section 340 is compressed, and an "A/B information" indicator identifies provider information. A "headend identifier" identifies the network operator 202 as having generated the program guide data file 218. A "target locale" identifies the language (e.g., English) of the recipient client devices 108.

A "data source type" indicates the listings data provider type. A "last schedule entry start time" identifies the last program start time in the program guide data 212. An "authoritative start time" indicates a start time of the first scheduled record which can be implemented as the headend time zone plus an additional two hours. An "authoritative end time" indicates an end time of the last scheduled record. A "unique dictionary identifier and/or name" indicates a file and path name that informs a client device where to find a compression dictionary file corresponding to the data strings section 340 having been compressed.

**Categories data section**: The categories data section 344 includes the following program guide data file 218 information:

| | |
|---|---|
| Section id | 8 |
| Section version | 1 |
| Element length | 8 |
| Number of elements | number of categories |

The categories data section 344 is identified as the eighth section of the program guide data file 218, has a total element length of eight bytes, and includes a total number of categories as the number of elements. The element data types for the categories data section include the following:
- string:: category name
- string:: subcategory name

The "category name" identifies the category of a particular program, such as a movie, a comedy, a sporting event, a news program, a sitcom, a talk show, or as any number of other category descriptions. The "subcategory name" further identifies and/or distinguishes the category of the particular program. For example, a program categorized as a movie may be subcategorized as an action movie, or as a comedy. Further, a sporting event may be subcategorized as a football game, or as a baseball game.

**PPV Information data section**: The pay-per-view (PPV) information data section 346 includes the following program guide data file 218 information:

| | |
|---|---|
| Section id | 9 |
| Section version | 1 |
| Element length | 11 |
| Number of elements | number of schedule entries with PPV info |

The PPV information data section 346 is identified as the ninth section of the program guide data file 218, has a total element length of eleven bytes, and includes the total number of schedule entries in the program guide data file 218 that has associated PPV information as the number of elements. The element data types for the PPV information data section include the following:
- short:: schedule entry index
- byte:: (1: all day, 2: type)
- string:: purchase string
- long:: PPV service identifier

The "schedule entry index" references to an element entry in the schedule data section 336 that identifies a corresponding program as having associated PPV information. The "all day" parameter indicates that the channel runs on the tuner position all day, and the "type" parameter indicates an impulse or a non-impulse PPV selection. A "purchase string" includes client offer terms to purchase and receive a PPV program and a "PPV service identifier" identifies a link into the PPV system.

**Qualifiers data section**: The qualifiers data section 348 contains additional qualifier information that may be included with the program, channel, and schedule information corresponding to a particular program. The qualifiers data section includes the following program guide data file 218 information:

| | |
|---|---|
| Section id | 10 |
| Section version | 1 |
| Element length | 8 |
| Number of elements | total number of qualifiers (program, channel, and schedule) |

The qualifiers data section 348 is identified as the tenth section of the program guide data file 218, has a total element length of eight bytes, and includes a total number of qualifiers for the program, channel, and schedule information in program guide data 212 as the number of elements. The element data types for the qualifiers data section include the following:
- string:: qualifier name
- string:: qualifier value

The "qualifier name" identifies the particular program, channel, or schedule qualifier and the "qualifier value" identifies the content of the qualifier. A qualifier can be utilized for extensibility to add information about a particular program, for example, without changing the format of the program guide data file 218. The qualifiers, such as the program qualifiers 350, channel qualifiers 352, and schedule qualifiers 354, can be implemented to enable format extensibility of the program guide data file 218 without modifying the file format. This enables a server (e.g., network operator 202) to serve multiple clients with different program guide data processing capabilities.

**Program Qualifiers data section**: The program qualifiers data section 350 cross-references a program with a particular qualifier and includes the following program guide data file 218 information:

| | |
|---|---|
| Section id | 11 |
| Section version | 1 |
| Element length | 4 |
| Number of elements | number of program qualifiers |

The program qualifiers data section 350 is identified as the eleventh section of the program guide data file 218, has a total element length of four bytes, and includes a total number of program qualifiers as the number of elements. The element data types for the program qualifiers data section include the following:
- short:: qualifier index
- short:: program index

The "program index" and the "qualifier index" parameters are indexes into the programs data section 334 and into the qualifiers data section 348, respectively, to cross-reference a particular program with a qualifier.

**Channel Qualifiers data section**: The channel qualifiers data section 352 cross-references a channel with a particular qualifier and includes the following program guide data file 218 information:

| | |
|---|---|
| Section id | 12 |
| Section version | 1 |
| Element length | 4 |
| Number of elements | number of channel qualifiers |

The channel qualifiers data section 352 is identified as the twelfth section of the program guide data file 218, has a total element length of four bytes, and includes a total number of channel qualifiers as the number of elements. The element data types for the channel qualifiers data section include the following:
- short:: qualifier index
- short:: channel index

The "channel index" and the "qualifier index" parameters are indexes into the channels data section 332 and into the qualifiers data section 348, respectively, to cross-reference a particular channel with a qualifier.

**Schedule Qualifiers data section**: The schedule qualifiers data section 354 cross-references a schedule entry with a particular qualifier and includes the following program guide data file 218 information:

| | |
|---|---|
| Section id | 13 |
| Section version | 1 |
| Element length | 4 |
| Number of elements | number of schedule qualifiers |

The schedule qualifiers data section 354 is identified as the thirteenth section of the program guide data file 218, has a total element length of four bytes, and includes a total number of schedule qualifiers as the number of elements. The element data types for the schedule qualifiers data section include the following:
- short:: qualifier index
- short:: schedule entry index

The "schedule entry index" and the "qualifier index" parameters are indexes into the schedule data section 336 and into the qualifiers data section 348, respectively, to cross-reference a particular schedule entry with a qualifier.

**Rating Systems data section**: The rating systems data section 356 includes the following program guide data file 218 information:

| | |
|---|---|
| Section id | 14 |
| Section version | 1 |
| Element length | 10 |
| Number of elements | number of rating systems |

The rating systems data section 356 is identified as the fourteenth section of the program guide data file 218, has a total element length of ten bytes, and includes a total number of rating systems as the number of elements. The element data types for the rating systems data section include the following:
- string:: rating system name
- string:: description of rating system
- short:: type of rating system

The "rating system name" identifies the rating system and the "description of rating system" is an index to the data strings data section 340 which includes a string data description of a corresponding rating system. The "type of rating system" identifies the rating system as a television rating system, a movie rating system, a foreign rating system, or as any number of other types of rating systems.

**Ratings data section**: The ratings data section 358 includes the following program guide data file 218 information:

| | |
|---|---|
| Section id | 15 |
| Section version | 1 |
| Element length | 12 |
| Number of elements | number of different ratings |

The ratings data section 358 is identified as the fifteenth section of the program guide data file 218, has a total element length of twelve bytes, and includes the total number of different ratings as the number of elements. The element data types for the programs data section include the following:
- short:: rating system index
- short:: rating value
- string:: rating name
- string:: rating description

The "rating system index" references to an element entry in the rating systems data section 356. The "rating value" is a table index to indicate the associated rating, such as "G", "PG", "R", and the like, which is indicated as the "rating name". The "rating description" is an index into the data strings data section 340 which includes a string data description of a corresponding rating name.

**Program Category data section**: The program category data section 360 cross-references a category entry with a particular program and includes the following program guide data file 218 information:

| | |
|---|---|
| Section id | 16 |
| Section version | 1 |
| Element length | 6 |
| Number of elements | number of different program categories |

The program category data section 360 is identified as the sixteenth section of the program guide data file 218, has a total element length of six bytes, and includes a total number of the different program categories as the number of elements. The element data types for the program category data section include the following:
- short:: program index
- short:: category index
- short:: percentage of relevance

The "program index" and the "category index" parameters are indexes into the programs data section 334 and into the categories data section 344, respectively, to cross-reference a particular program with a category. The "percentage of relevance" indicates how well, or to what extent, the program is described by the category identification. For example, a program that is a romantic comedy can be categorized as both a romance and a comedy. The "percentage of relevance" specifies a relationship to indicate which category better identifies the particular program, such as Romance: 70% and Comedy: 30% (e.g., the program is more of a romance having comedic values. It should be noted that there may be an unlimited number of categories and relevance percentages associated with a particular program, such as Action: 50%, Horror: 30%, Romance: 10%, Science Fiction: 5%, and Fantasy: 5%, for example.

### Methods for Parsed Program Guide Data

Methods for parsed program guide data may be described in the general context of computer-executable instructions performed by a program guide format application 216 at network operator 202. Generally, computer-executable instructions include routines, programs, objects, components, data structures, and the like that perform particular functions or implement particular abstract data types. Methods for parsed program guide data may also be practiced in distributed computing environments where functions are performed by remote processing devices that are linked through a communications network. In a distributed computing environment, computer-executable instructions may be located in both local and remote computer storage media, including memory storage devices.

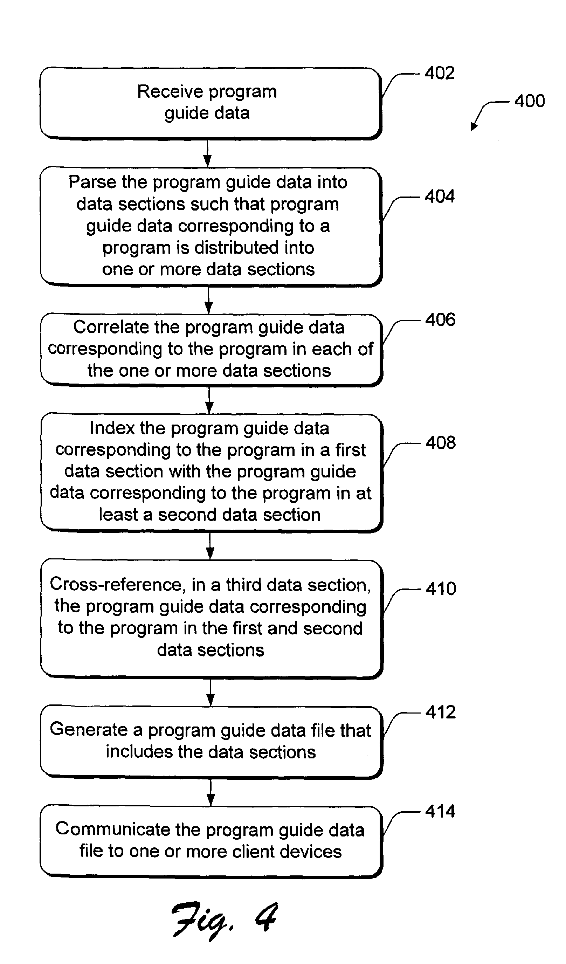

Fig. 4 illustrates a method 400 for parsed program guide data. The order in which the method is described is not intended to be construed as a limitation, and any number of the described method blocks can be combined in any order to implement the method. Furthermore, the method can be implemented in any suitable hardware, software, firmware, or combination thereof.

At block 402, program guide data is received. For example, network operator 202 receives program guide data 212 (Fig. 2) from a program guide data provider 104 (Fig. 1). At block 404, the program guide data is parsed into data sections such that the program guide data corresponding to a program is distributed into one or more of the data sections. For example, a title and a description of the program are parsed into the data strings data section 340, and a channel number associated with the program is parsed into the channels data section 332.

At block 406, the program guide data corresponding to the program in each of the one or more data sections is correlated. Correlating the program guide data corresponding to the program can include indexing the program guide data corresponding to the program in a first data section with the program guide data corresponding to the program in at least a second data section at block 408. Alternatively, and/or in addition, the program guide data corresponding to the program in a first data section can be cross-referenced with the program guide data corresponding to the program in at least a second data section at block 410. This can include the program guide data corresponding to the program in the first data section and in the second data section being cross-referenced in a third data section. For example, a title and a description of the program are referenced from a programs data section 334, and the title and the description are parsed into the data strings data section 340. Further, a channel number in the schedule data section 336 can be cross-referenced to program guide data corresponding to the program in the programs data section 334.

At block 412, a program guide data file is generated that includes the data sections. For example, program guide format application 216 in network operator 202 generates the program guide data file 218 from the program guide data 212. At block 414, the program guide data file is communicated to one or more client devices, such as television-based receiving devices. For example, network operator 202 (e.g., content distribution system 106 (Fig. 1)) communicates the program guide data file 218 to client devices 108 via the broadcast network 110.

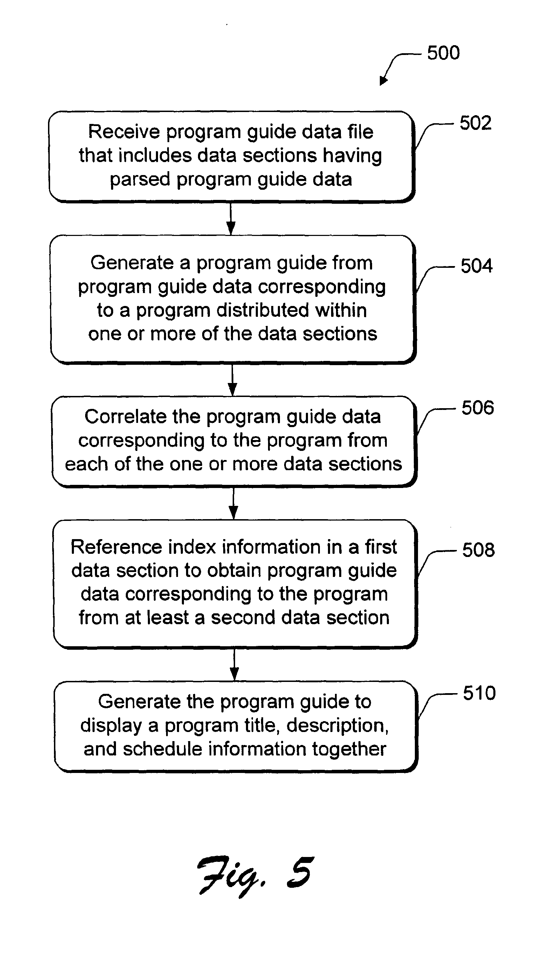

Fig. 5 illustrates a method 500 for parsed program guide data. The order in which the method is described is not intended to be construed as a limitation, and any number of the described method blocks can be combined in any order to implement the method. Furthermore, the method can be implemented in any suitable hardware, software, firmware, or combination thereof.

At block 502, a program guide data file is received that includes data sections having parsed program guide data. For example, a client device 108 receives the program guide data file 218 from network operator 202 via the broadcast network 110. At block 504, a program guide is generated from program guide data corresponding to a program distributed within one or more of the data sections. Generating the program guide can include correlating the program guide data corresponding to the program from each of the one or more data sections at block 506.

Alternatively, or in addition, generating the program guide includes referencing index information in a first data section to obtain program guide data corresponding to the program from at least a second data section at block 508. For example, index information in the programs data section 334 is referenced to obtain a title and/or a description of the program from the data strings data section 340. Further, schedule information associated with the program is referenced from the schedule data section 336.

At block 510, the program guide is generated to display the program title, description, and schedule information together. At block 512, the program guide is communicated for display. For example, client device 108(2) generates a program guide and communicates the program guide to television 138(2) for display.

### Conclusion

Although the invention has been described in language specific to structural features and/or methods, it is to be understood that the invention defined in the appended claims is not necessarily limited to the specific features or methods described. Rather, the specific features and methods are disclosed as preferred forms of implementing the claimed invention.

## Claims

1. A method, comprising:
receiving program guide data;
parsing the program guide data into data sections such that the program guide data corresponding to a program is distributed into one or more of the data sections;
generating a data file that includes the data sections.

2. A method as recited in claim 1, further comprising communicating the data file to one or more client devices.

3. A method as recited in claim 1, further comprising communicating the data file to one or more television-based receiving devices.

4. A method as recited in claim 1, further comprising correlating the program guide data corresponding to the program in each of the one or more data sections.

5. A method as recited in claim 1, further comprising indexing the program guide data corresponding to the program in a first data section with the program guide data corresponding to the program in at least a second data section.

6. A method as recited in claim 1, further comprising cross-referencing the program guide data corresponding to the program in a first data section with the program guide data corresponding to the program in at least a second data section, the program guide data corresponding to the program in the first data section and in the second data section being cross-referenced in a third data section.

7. A method as recited in claim 1, further comprising referencing to a title and to a description of the program from a programs data section, the title and the description parsed into a data strings data section.

8. A method as recited in claim 1, wherein parsing includes parsing a title and a description of the program into a data strings data section, and parsing a channel number associated with the program into a channels data section.

9. A method as recited in claim 8, further comprising referencing to the title and to the description from a programs data section, and cross-referencing the channel number in a schedule data section to program guide data corresponding to the program in the programs data section.

10. One or more computer-readable media comprising computer-executable instructions that, when executed, direct a parsed program guide data provider to perform the method of claim 1.

11. One or more computer-readable media comprising computer-executable instructions that, when executed, direct a computing device to perform the method of claim 1.

12. A method, comprising:
receiving a program guide data file that includes data sections having parsed program guide data;
generating a program guide from program guide data corresponding to a program distributed within one or more of the data sections; and
communicating the program guide for display.

13. A method as recited in claim 12, wherein generating the program guide includes correlating the program guide data corresponding to the program from each of the one or more data sections.

14. A method as recited in claim 12, wherein generating the program guide includes referencing index information in a first data section to obtain program guide data corresponding to the program from at least a second data section.

15. A method as recited in claim 12, wherein generating the program guide includes referencing index information in a programs data section to obtain a description of the program from a data strings data section.

16. A method as recited in claim 12, wherein generating the program guide includes:
referencing index information in a programs data section to obtain a title and a description of the program from a data strings data section;
referencing schedule information associated with the program from a schedule data section; and
generating the program guide to display the program title, description, and schedule information together.

17. One or more computer-readable media comprising computer-executable instructions that, when executed, direct video recorder system to perform the method of claim 12.

18. One or more computer-readable media comprising computer-executable instructions that, when executed, direct a computing device to perform the method of claim 12.

19. A program guide data system, comprising:
a memory device configured to maintain program guide data received from a program guide data provider;
a program guide format application configured to:
parse the program guide data into data sections such that the program guide data corresponding to a program is distributed into one or more of the data sections; and
generate a data file that includes the data sections.

20. A program guide data system as recited in claim 19, wherein the program guide format application is further configured to communicate the data file to one or more client devices.

21. A program guide data system as recited in claim 19, wherein the program guide format application is further configured to communicate the data file to one or more television-based receiving devices.

22. A program guide data system as recited in claim 19, wherein the program guide format application is further configured to correlate the program guide data corresponding to the program in each of the one or more data sections.

23. A program guide data system as recited in claim 19, wherein the program guide format application is further configured to index the program guide data corresponding to the program in a first data section with the program guide data corresponding to the program in at least a second data section.

24. A program guide data system as recited in claim 19, wherein the program guide format application is further configured to cross-reference the program guide data corresponding to the program in a first data section with the program guide data corresponding to the program in at least a second data section, the program guide data corresponding to the program in the first data section and in the second data section being cross-referenced in a third data section.

25. A program guide data system as recited in claim 19, wherein the program guide format application is further configured to reference to a description of the program from a programs data section, the description parsed into a data strings data section.

26. A program guide data system as recited in claim 19, wherein the program guide format application is further configured to parse a description of the program into a data strings data section, and parse a channel number associated with the program into a channels data section.

27. A program guide data system as recited in claim 26, wherein the program guide format application is further configured to reference to the description from a programs data section, and cross-reference the channel number in a schedule data section with program guide data corresponding to the program in the programs data section.

28. A television-based system comprising the program guide data system as recited in claim 19.

29. A video recording system comprising the program guide data system as recited in claim 19.

30. A television-based system, comprising:
means for parsing program guide data into data sections such that the program guide data corresponding to a program is distributed into one or more of the data sections; and
means for correlating the program guide data corresponding to the program in each of the one or more data sections.

31. A television-based system as recited in claim 30, further comprising means for generating a data file for communication to one or more client devices, the data file including the data sections.

32. A television-based system as recited in claim 30, wherein the means for correlating includes indexing the program guide data corresponding to the program in a first data section with the program guide data corresponding to the program in at least a second data section.

33. A television-based system as recited in claim 30, wherein the means for correlating includes cross-referencing the program guide data corresponding to the program in a first data section with the program guide data corresponding to the program in at least a second data section, the program guide data corresponding to the program in the first data section and in the second data section being cross-referenced in a third data section.

34. A parsed program guide data system comprising the television-based system as recited in claim 30.

35. A computing device comprising the television-based system as recited in claim 30.

36. One or more computer-readable media comprising computer-executable instructions that, when executed, direct a program guide data system to:
parse program guide data into data sections such that program guide data corresponding to a program is distributed into one or more of the data sections; and
generate a data file that includes the data sections.

37. One or more computer-readable media as recited in claim 36, further comprising computer executable instructions that, when executed, direct the program guide data system to communicate the data file to one or more client devices.

38. One or more computer-readable media as recited in claim 36, further comprising computer executable instructions that, when executed, direct the program guide data system to communicate the data file to one or more television-based receiving devices.

39. One or more computer-readable media as recited in claim 36, further comprising computer executable instructions that, when executed, direct the program guide data system to correlate the program guide data corresponding to the program in each of the one or more data sections.

40. One or more computer-readable media as recited in claim 36, further comprising computer executable instructions that, when executed, direct the program guide data system to index the program guide data corresponding to the program in a first data section with the program guide data corresponding to the program in at least a second data section.

41. One or more computer-readable media as recited in claim 36, further comprising computer executable instructions that, when executed, direct the program guide data system to cross-reference the program guide data corresponding to the program in a first data section with the program guide data corresponding to the program in at least a second data section, the program guide data corresponding to the program in the first data section and in the second data section being cross-referenced in a third data section.

42. One or more computer-readable media as recited in claim 36, further comprising computer executable instructions that, when executed, direct the program guide data system to reference to a description of the program from a programs data section, the description parsed into a data strings data section.

43. One or more computer-readable media as recited in claim 36, further comprising computer executable instructions that, when executed, direct the program guide data system to parse a description of the program into a data strings data section, and parse a channel number associated with the program into a channels data section.

44. One or more computer-readable media as recited in claim 43, further comprising computer executable instructions that, when executed, direct the program guide data system to reference to the description from a programs data section, and cross-reference the channel number in a schedule data section with program guide data corresponding to the program in the programs data section.

45. One or more computer-readable media having stored thereon a data structure, comprising:
a first data section that contains string data corresponding to a program;
a second data section that identifies the program and contains an index to the string data in the first data section;
a third data section that contains a tuner channel number; and
a fourth data section that contains a program index to the program in the second data section and a channel index to the tuner channel number in the third data section to cross-reference the program and the tuner channel number.

46. One or more computer-readable media as recited in claim 45, wherein the string data in the first data section includes a title of the program and a description of the program.

47. One or more computer-readable media as recited in claim 45, wherein the string data in the first data section includes a title of the program followed by a description of the program, and wherein the index in the second data section references the title of the program such that the title of the program and the description of the program are referenced together.

48. One or more computer-readable media as recited in claim 45, further comprising a fifth data section that contains a universal resource locator that references to additional information corresponding to the program.

49. One or more computer-readable media as recited in claim 45, further comprising:
a fifth data section that contains a program rating; and
a sixth data section that contains a second program index to the program in the second data section and a rating index to the program rating in the fifth data section to cross-reference the program and the program rating.

50. One or more computer-readable media as recited in claim 45, further comprising:
a fifth data section that contains a program category; and
a sixth data section that contains a second program index to the program in the second data section and a category index to the program category in the fifth data section to cross-reference the program and the program category.

51. One or more computer-readable media as recited in claim 45, further comprising:
a fifth data section that contains a qualifier; and
a sixth data section that contains a second program index to the program in the second data section and a qualifier index to the qualifier in the fifth data section to cross-reference the program and the qualifier.
